# EUROPEAN PATENT SPECIFICATION

(11) **EP 2 499 864 B1**
(45) Date of publication and mention of the grant of the patent: **17.02.2021**
(21) Application number: 10829577.5
(22) Date of filing: 11.11.2010
(51) Int. Cl.: H04W 48/16

(54) **WIRELESS SIGNAL TRANSCEIVER WITH AUTOMATIC MODE CHANGE, AND METHOD**
SENDER/EMPFÄNGER FÜR DRAHTLOSSIGNALE MIT AUTOMATISCHEM MODUSWECHSEL UND VERFAHREN DAFÜR
ÉMETTEUR-RÉCEPTEUR DE SIGNAL SANS FIL AVEC CHANGEMENT DE MODE AUTOMATIQUE ET PROCÉDÉ ASSOCIÉ

(30) Priority: 11.11.2009 FI 20096174
(43) Date of publication of application: 19.09.2012
(73) Proprietor: AiRISTA Flow, Inc., Newark, DE 19711 (US); AiRISTA International Oy, 02130 Espoo (FI)
(72) Inventor: VASKO, Kari, FI-00180 Helsinki (FI); VANHATUPA, Timo, FI-00180 Helsinki (FI); HUHTINIEMI, Arttu, FI-00180 Helsinki (FI)
(74) Representative: Kolster Oy Ab
(86) International application number: PCT/FI2010/050908
(87) International publication number: WO 2011/058228

(56) References cited:
- EP-A1- 1 705 837
- EP-A1- 1 944 915
- WO-A2-2008/006077
- WO-A2-2008/008987
- US-A1- 2004 105 416
- US-A1- 2004 110 530
- US-A1- 2004 214 539
- US-A1- 2007 237 121
- US-A1- 2007 248 058
- US-A1- 2008 014 934
- US-A1- 2008 096 501
- US-A1- 2008 150 698

## Description

### Field of the invention

The invention relates a wireless signal transceiver capable of automatic mode changing. The invention also relates to a method for operating such a wireless signal transceiver. An illustrative but non-restrictive example of such a wireless signal transceiver is a positioning tag.

### Background of the invention

The inventive wireless signal transceiver and the related problems are best understood by referring to a specific, yet non-restrictive example, such as a positioning tag. As used herein, the term "positioning tag" means a compact electronic device designed so as to be attached to or co-located with persons, instruments and/or assets, the positions of which are being tracked. In one implementation, the positioning tag observes one or more physical properties in an environment and occasionally transmits its observations to a positioning server. In an illustrative but non-restrictive example, the environment being observed is a wireless local-area network (WLAN) and the one or more physical properties being observed include one or more signal quality parameters, such as signal strength, signal-to-noise ratio and/or bit error ratio. The positioning tag transmits the observations made by it via the WLAN network to the positioning server that estimates the location of the positioning tag by utilizing the signal quality observations and a model of the environment. External entities may obtain the current location and/or location history of the positioning tag by querying the positioning server.

In an alternative implementation a positioning tag may spontaneously and periodically transmit frames that identify the positioning tag. These frames are received by access points that observe one or more signal quality parameters, such as signal strength, from the frames transmitted by the positioning tag. The observed signal quality parameters are conveyed to the positioning server.

Active scanning is normally preferable to passive scanning because in passive scanning the signal transceiver must remain on a channel for a longer time than in active scanning. This takes more time and consumes more energy than active scanning does.

The two implementations of the positioning tag, namely the one wherein the positioning tag observes the signal quality of transmissions from several access points and the one wherein the signal quality of the transmissions from the positioning tag is observed by the several access points can be combined in the following definition: the positioning tag is capable of operating as a signal transmitter and/or signal receiver in a positioning system which comprises, in addition to the wireless signal transceiver, a plurality of access points and a positioning server which positions the wireless signal transceiver based on received signal quality observations from signal transmissions between the wireless signal transceiver and the plurality of access points.

When a signal transceiver, such as the exemplary positioning tag, attempts to establish itself as a WLAN client seeking to join a WLAN network, it needs to find an access point capable of supporting it. Normally the WLAN client performs an active scan of the WLAN network, wherein the WLAN client transmits probe request messages on all available channels until the client finds an access point. In the active scan the WLAN client broadcasts a probe request on every channel supported by its physical layer and waits long enough to hear a possible probe response. A watchdog timer terminates the wait in case the probe response is not received. In that case the WLAN client proceeds to test the next selected channel for the presence of an access point by sending a probe request on that channel. This process is repeated until the channels are exhausted. If a WLAN network is not found by this process, the scan fails. Alternatively, the WLAN client may perform a passive scan of the WLAN network, in which the WLAN client does not send anything but monitors all or selected channels until it hears a beacon frame that contains an identifier of the WLAN network.

A problem in this scenario is seen in cases wherein the asset and the positioning tag attached to it need to be transported by air. Transporting by air is problematic in that transmission of radio or microwave signals is prohibited during flight. In addition to airplanes, there may be other application domains in which transmission of radio or microwave signals is prohibited. One other example can be found in patent documents US2008/014934 and US2008/15069.

### Brief description of the invention

An object of the invention is to develop a positioning tag so as to alleviate one or more of the problems identified above. The object of the invention is attained via the aspects of the invention which are defined in the attached independent claims. The dependent claims and the detailed description of the specific embodiment as well as the drawings relate to optional features of the invention that solve residual problems and/or provide additional benefits.

An aspect of the invention is a wireless signal transceiver, which comprises wireless signal transmission means for transmitting and receiving signals in one or more wireless networks. The wireless signal transceiver further comprises a microprocessor and memory. The memory comprises a scan mode program, the execution of which by the microprocessor causes the wireless signal transceiver to receive and store in the memory one or more predefined wireless network identifiers; and to enable one scan mode at a time. The currently enabled scan mode is selected from a set of scan modes that includes an active scan mode and a passive scan mode. In the active scan mode the wireless signal transceiver repeatedly transmits a probe request message on one or more channels, until the wireless signal transceiver receives a probe response message from the wireless network, which case results in a successful active scan, or until a fulfilment of a predetermined set of criteria terminates the active scan, which case results in a failed active scan. In the passive scan mode of the wireless network the wireless signal transceiver does not send anything to or via the wireless network but waits for a received wireless network identifier from at least one of the one or more wireless networks. Execution of the scan mode program by the microprocessor causes the wireless signal transceiver to enable the active scan mode in response to a successful active scan or to a reception of a wireless network identifier that matches at least one of the predefined wireless network identifiers stored in the memory of the wireless signal transceiver. Execution of the scan mode program by the microprocessor further causes the wireless signal transceiver to enable the passive scan mode in response to a failed active scan.

In the above definition of the invention, the probe request message is a message which the wireless signal transceiver transmits for the purpose of determining whether the wireless signal transceiver is located in an area supported by at least one wireless network. The probe request message does not necessarily mean that the wireless signal transceiver intends to attach to the wireless network. Conversely, the probe response message is a message which an access point sends in response to the probe request message from the wireless signal transceiver. As regards the present invention, a primary function of the probe request and probe response message pair is for the wireless signal transceiver to determine if it is located in an area supported by at least one wireless network, and if it is, to obtain the network identifier(s) of some or all of the wireless network(s) covering the wireless signal transceiver's current location.

In current WLAN networks, as defined in IEEE standard 802.11 for instance, the probe request message and the probe response message may be implemented by means of messages actually called PROBE REQUEST MMPDU and PROBE RESPONSE MMPDU (MMPDU = MAC Management Protocol Data Unit, MAC=Media Access Control), but there may be other messages suitable for performing a corresponding function.

In the above definition of the invention, the fulfilment of a predetermined set of criteria that terminates the active scan, which case results in a failed active scan, can be implemented by repeatedly transmitting the probe request message a predetermined number of times or for a predetermined period of time, and proceeding to a subsequent channel until all channels or a selected subset of channels are exhausted. In other words, a failure to receive a probe response message after each transmitted probe request message does not necessarily indicate a failed active scan.

As used herein, the term "predefined wireless network identifier" means a network identifier that is conveyed to the wireless signal transceiver and stored in its memory as part of a set of permissible network identifiers prior to situations in which the wireless signal transceiver is prohibited from transmitting. Such predefined network identifiers identify "permissible" networks in the sense that the wireless signal transceiver deems it permissible to transmit to a network on receiving a network identifier that matches at least one of the predefined wireless network identifiers.

In an illustrative but non-restrictive embodiment, the inventive wireless signal transceiver is a positioning tag. In this case the memory further comprises a positioning program, the execution of which by the microprocessor causes the wireless signal transceiver to act as a signal transmitter and/or a signal receiver in a positioning system which comprises, in addition to the wireless signal transceiver, a plurality of access points and a positioning server which positions the wireless signal transceiver based on received signal quality observations from signal transmissions between the wireless signal transceiver and the plurality of access points.

In some embodiments, the wireless signal transceiver further comprises one or more environmental indication sensors configured to indicate environmental conditions which are typical for an airplane. The wireless signal transceiver is configured to disable transmission via the WLAN interface means in response to an indication of said environmental conditions. For instance, the environmental indication sensor(s) may be responsive to temperature, humidity, air pressure, sound and electromagnetic signals or any combination of these environmental indicators. The expression "conditions typical for an airplane" should be understood in the sense that it is the designer's task to determine the environmental indicators that are typical for an airplane and store reference data representing such conditions to the positioning tag's memory. During operation, the wireless signal transceiver's microprocessor reads the output of the environmental indication sensor(s), compares the output with the stored reference data, and if they are similar, the microprocessor keeps the wireless signal transceiver in the passive scan mode.

The use of environmental indication sensor(s) which indicate conditions in which radio or microwave transmission is prohibited may be generalized to application domains other than airplanes. In some implementations such application domains may be explicitly indicated by transmitting one or more predefined network identifiers, such as SSID frames. The inventive positioning tag or other signal transceiver may be configured to disable transmissions in response to receiving any of such predefined network identifiers. This means that the inventive positioning tag or other signal transceiver may store two lists of network identifiers. A "white list" contains network identifiers the reception of which indicates that transmission, including active scan operations, is permitted, while a "black list" contains network identifiers whose reception indicates that any transmission is prohibited.

In one embodiment the execution of the program code means is configured to place the positioning tag in the passive scan mode for a predefined minimum time. The predefined minimum time may be specific to each network identifier. This embodiment makes the positioning tags immune to accidental or fraudulent transmissions of network identifiers similar to those stored in the positioning tag's memory, until the predefined minimum time has passed. The predefined minimum time may be expressed in absolute or relative time, and it should correspond to the expected duration of the expected flight.

In another embodiment the positioning tag further comprises means, such as a motion sensor and processing logic, for putting the positioning tag to a power-saving mode during movement. The rationale is that there is little point in positioning a tag until it nas settled in place. The invention is defined by the appended claims.

### Brief description of the drawings

In the following the invention will be described in greater detail by means of specific embodiments with reference to the attached drawings, in which
Figure 1 shows an exemplary network architecture in which the invention can be used;
Figure 2 is a schematic block diagram of a signal transceiver, which forms the core of the positioning tag shown in Figure 1;
Figure 3A shows an exemplary state transition diagram for an inventive positioning tag;
Figure 3B shows a state transition diagram for an embodiment of the inventive positioning tag which implements a minimum wait time before resuming active scan mode;
Figure 3C shows a state transition diagram for an embodiment of the inventive positioning tag which utilizes a motion sensor for saving battery power; and
Figure 4 is a signalling diagram depicting a series of events in the scenario shown in Figure 1.

### Detailed description of specific embodiments

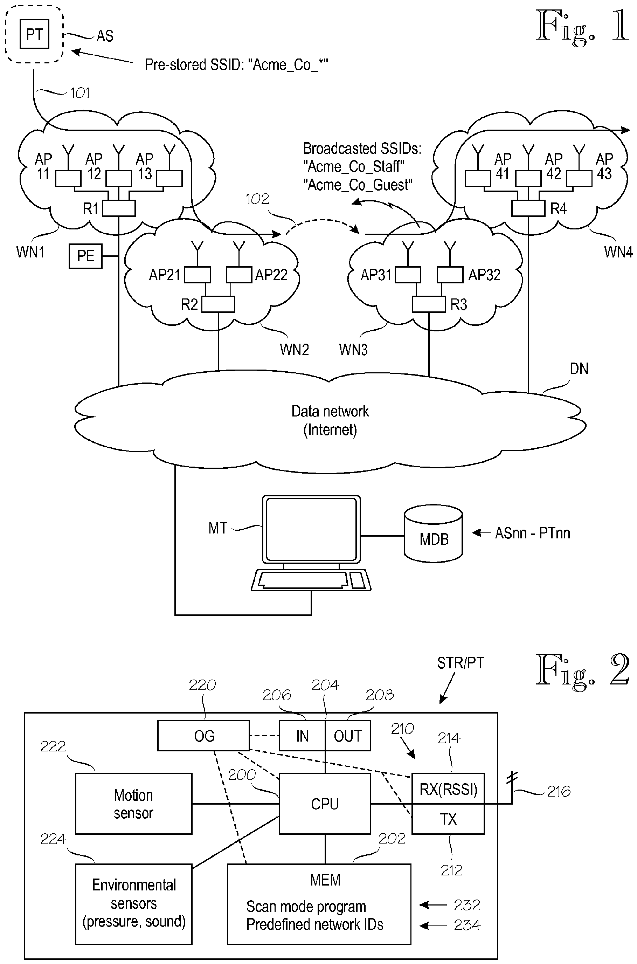

Figures 1 to 4 relate to an illustrative but non-restrictive example, in which the wireless signal transceiver is a positioning tag and the wireless networks are WLAN networks. Those skilled in the art will realize that the invention is applicable to other types of wireless signal transceivers and wireless networks.

Figure 1 shows an exemplary network architecture in which the invention can be used. In the example shown, a positioning tag PT is attached to an asset AS, such as a parcel, the position of which is being tracked. The positioning tag comprises a signal transceiver capable of communicating as a WLAN client in a WLAN network. By way of example, Figure 1 shows four WLAN networks, which are denoted by reference signs WN1 through WN4, but this number is purely arbitrary. Each WLAN network WN1 - WN4 comprises a plurality of access points, denoted by reference signs APxy, wherein x stands for the number of the WLAN network WN1 - WN4, while y is a running number for the access point in question within a particular WLAN network. Each WLAN network WN1 - WN4 also comprises a respective router R1 through R4, via which the WLAN network connects to a data network DN, which typically is an IP (Internet Protocol) network, such as the internet or a closed subnetwork of it, commonly referred to as an intranet or extranet.

A positioning engine, denoted by reference sign PE, is coupled to system. In the example shown, the positioning engine is in the vicinity of WLAN network WN1. While the positioning tag is coupled to any of the WLAN networks WN1 - WN4, it makes observations of one or more signal quality parameters and transmits those observations to the positioning engine PE via the WLAN network. Techniques for constructing such a positioning engine are disclosed in reference documents 1 through 6 which are commonly-owned patent applications.

A management database MDB stores associations between each pair of asset AS and positioning tag PT. A management terminal MT is operationally coupled to the management database MDB. When the user of the management terminal MT or some external entity (not shown) requests the current position or position history of an asset AS, the management terminal MT queries the management database MDB for identity of the positioning tag associated with the asset in question. The management terminal MT then queries the positioning engine PE for the current position or position history of the corresponding positioning tag PT.

As stated earlier, a typical positioning tag comprises a signal transceiver capable of communicating as a WLAN client in a WLAN network. When the positioning tag attempts to establish itself as a WLAN client seeking to join a WLAN network, it needs to find an access point capable of supporting it. In order to find the access point, the WLAN client has a choice between a passive scan and an active scan. A passive scan involves listening on successive or selected channels and waiting on each channel to receive a network identifier from an access point. In current WLAN networks, the network identifier is transmitted in a BEACON message that includes a Service Set Identifier (SSID). In an active scan of the network the WLAN client transmits a message, the purpose of which is to request a response message from the response. In current WLAN networks, as defined in IEEE standard 802.11, this request message is called a PROBE REQUEST MMPDU (MAC Management Protocol Data Unit, MAC=Media Access Control). The WLAN client transmits such messages on all supported or selected channels until it finds receives a response message from an access point. In current WLAN networks, as defined in IEEE standard 802.11, this response message is called a PROBE RESPONSE. In an active scan the client broadcasts a probe request on every channel supported by its physical layer and waits long enough to hear a possible probe response. Typically a watchdog timer terminates the wait in case the probe response is not received in a predetermined maximum time. Alternatively the WLAN client may transmit the probe request message a predetermined number of times. In case the WLAN client does not receive a probe response message, it proceeds to test the next channel for the presence of an access point by sending one or more probe request messages on that channel. This process is repeated until the channels are exhausted.

In a passive scan the WLAN client must listen for a network identifier on each channel for some amount of time before proceeding to the next channel and repeating the wait operation on that channel. In current WLAN networks, as defined in IEEE standard 802.11, the network identifier is sent in BEACON SSID frames. Thus the SSID is a WLAN-specific example of a network identifier. It is possible that the WLAN client might not hear a BEACON SSID frame for quite a while. Thus the passive scan method is slower and more energy-consuming than the active scan method.

A positioning engine PE as described above can be constructed by utilizing information disclosed in the reference documents listed near the end of this specification. Alternatively, software for the positioning engine PE can be purchased from the proprietor of this application.

Suppose that the asset AS, to which the positioning tag PT is attached to, follows a path 101 that traverses all the WLAN networks WN1 through WN4 shown in Figure 1. Whenever the positioning tag moves from an old WLAN network to a new one, it must attach to the new WLAN network via one of the two scan methods described previously, if it needs to communicate via the net network. Normally it is beneficial to use the active scan method because it is faster and more energy-efficient than the passive scan method.

A problem in the above scenario is seen in cases wherein the positioning tag's path 101 includes one or more sections by air. Reference numeral 102 denotes an example of such a section. Path sections by air are problematic in that the normally preferable active scan method cannot be used because transmission of radio or microwave signals is prohibited during flight. This is particularly important in case of freight containers that might contain dozens or hundreds of positioning tags, all of which might transmit furiously in order to locate an access point.

This problem might be solved by configuring the positioning tag to use passive scan exclusively. In that way the positioning tags send nothing until they receive a network identifier, such as the BEACON SSID frame from a WLAN access point. This seemingly simple solution suffers from the residual problem that the WLAN attachment via the passive scan method is slow. Because the positioning tag keep its radio part enabled for a longer time, more battery power is consumed than in the active scan method. A more elegant solution to this problem is provided by the present invention. The description of the inventive solution is preceded by a short description of the positioning tag's structure.

Figure 2 is a schematic block diagram of an exemplary positioning tag PT, which is an illustrative but non-restrictive example of a signal transceiver STR. The positioning tag PT being described herein is capable of making observations of transmissions from several access points and of transmitting the observations to a positioning server. As stated earlier, it is also possible to estimate the positioning tag's position by receiving transmissions and making signal quality observations of those transmissions at several access points that convey the observations to the positioning server.

The positioning tag PT or other type of signal transceiver STR comprises a microprocessor or central processing unit (CPU) 200 and memory 202. It may optionally comprise input-output circuitry 204 which consists of input circuitry 206 and/or output circuitry 208. The signal transceiver STR further comprises reception/transmission circuitry 210 which comprises a transmission circuitry 212, reception circuitry 214 and antenna 216. In many communication transceivers the reception circuitry 214 also comprises a received signal strength indicator RSSI. At this level of generalization, all elements 200 through 216 can be conventional as used in the relevant art.

In addition to sections which are present in any conventional signal transceiver STR, the positioning tag PT described herein comprises an observation generation unit 220 which is coupled with the above-described elements as follows. The observation generation unit 220 is typically implemented via program routines stored in the memory 202. The execution of the program routines of the observation generation directs the CPU 200 to obtain readings from the RSSI indicator in the reception circuitry 214. The execution also directs the CPU 200 to send the observations via the transmission circuitry 212 to the communication network which relays it to the positioning engine PE (see Figures 1 and 9).

Instead of obtaining observations from the RSSI indicator or in addition to the RSSI, the observation generation unit 220 may process observations of some other radiometric quantity, such as bit error rate/ratio, timing advance or the like, or it may obtain the observations from other measurement circuitry which is operatively coupled to the input circuitry 206 and which, for example, is operable to measure an atmospheric, acoustic or optical quantity in the environment.

According to an embodiment of the invention, the positioning tag's memory 202 comprises a scan mode program 232 in the form of program routines which are executable by the positioning tag's microprocessor 200. The execution of the scan mode program 232 by the microprocessor is configured, firstly, to receive and store in the memory one or more predefined network identifiers 234, such as SSID_{BEACON} strings, and secondly, to place the positioning tag in one of a set of scan modes at a time. One of the scan modes is an active scan mode, in which the positioning tag is configured to send the determined signal quality observations or derivatives thereof via the WLAN network to the positioning apparatus. In the active scan mode, the inventive positioning tag may operate similarly to a prior art positioning tag. Similarly, when the inventive idea is applied to a generic wireless signal transceiver other than a positioning tag, the signal transceiver STR may operate similarly to a conventional signal transceiver in its respective environment.

The set of scan modes also comprises a passive scan mode, in which the positioning tag PT or other signal transceiver STR is configured not to send anything to or via the network. The execution of the scan mode program 232 by the microprocessor places the signal transceiver STR in the passive scan mode if an active network scan fails, or in other words, if the signal transceiver STR fails to receive a network identifier from an access point until the active scan is terminated. Several criteria may be employed for terminating the active scan. For instance, the request message, such as the PROBE REQUEST MMPDU may be transmitted a predetermined number of times on each channel, or a watchdog timer may terminate the scan on that channel. If a PROBE REQUEST message is not received on any channel, the scan is considered a failure. Detection of a failed active scan by the signal transceiver's microprocessor 200, under control of the scan mode program, places the signal transceiver STR in the passive scan mode.

On the other hand, the execution of the scan mode program 232 by the microprocessor places or keeps the signal transceiver STR in the active scan mode in either of the following situations: 1) the active scan operation succeeds, or 2) the signal transceiver STR may receive a network identifier, such as a BEACON SSID frame, that matches at least one of the predefined wireless network identifiers stored in the memory of the wireless signal transceiver. Matching a previously stored network identifier by a received network identifier is not restricted to cases wherein the signal transceiver STR receives a network identifier identical with one of the previously stored network identifiers; rather the set of permissible network identifiers, that is, pre-stored identifiers of networks permitted to place the signal transceiver STR in the active scan mode, may be stored by using wildcards. For example, assume that the list of permissible network identifiers includes networks of "Acme Corporation". Acme Corporation may operate several networks, such as "Acme_Co_Staff" and "Acme_Co_Guest". The reception of a network identifier of either of these networks serves to indicate that the signal transceiver STR no longer resides in an airplane, and both networks may be indicated by a wildcard entry of "Acme_Co_*" in the list of permissible network identifiers stored in the memory of the signal transceiver STR.

This means that the inventive positioning tag PT or other signal transceiver STR remains in the passive scan mode during flight, because airplanes do not carry access points that transmit network identifiers that match any of the pre-stored permissible network identifiers.

Referring back to Figure 1, assume that the section of the path 101 contains a leg by flight, denoted by reference numeral 102, between WLAN networks WN2 and WN3. When the positioning tag PT is being prepared for transportation along the path 101, the network identifier (BEACON SSID string) of WLAN network WN3 can be pre-stored in the memory 202 of the positioning tag PT. The effect of this embodiment of the invention is such that when the positioning tag loses the coverage of WLAN network WN2 and the active WLAN scan fails, the positioning tag PT enters the passive scan mode and remains in it until it receives the BEACON SSID of WLAN network WN3. After the scan mode logic detects that the positioning tag PT has received the BEACON SSID of WLAN network WN3, it places the positioning tag PT to the active scan mode. Thus the positioning tag PT does not send anything until it detects the coverage of the WLAN network WN3.

It was stated earlier that in-air transmission by the positioning tags could be prevented by configuring the positioning tags to use passive scan exclusively, but the passive scan method suffers from certain problems related to the slowness of the method. These problems might be overcome by a positioning tag which employs the active scan method until it fails, resorts to a conventional passive scan method, and on receiving a network identifier for any access point, such as a BEACON SSID frame, resumes the active scanning method. Such an operation for the positioning tag incurs the risk that a large number of tags may be transported near a parcel that contains a device acting as a WLAN access point. If that access point is accidentally activated during flight, and it begins to transmit BEACON SSID frames, any positioning tags nearby would resort to the active scan method. In other words, an accidental activation of one WLAN access point in an airplane might trigger the transmission of PROBE REQUEST messages from all the positioning tags capable of receiving the accidentally transmitted BEACON SSID frame. The inventive positioning tag is not vulnerable to such accidental transmissions because it is only responsive to BEACON SSID packets that match at least one of the BEACON SSID strings stored in its memory before the flight.

Configuration of the positioning tag typically takes place via its user interface. Accordingly, the positioning tag's user interface should include a protocol for indicating permissible network identifiers, that is, network identifiers whose reception causes the mode change from passive scan mode to active scan mode. In a typical asset-tracking application, the number of positioning tags to be prepared for transportation is quite large. Accordingly, it is beneficial to implement the user interface 204 of the positioning tag PT via wireless technology. A way to do so is by using the WLAN means 210 also for the user interface. Other applicable wireless technologies include Bluetooth, infrared, or other proprietary interfaces.

In order to minimize energy-consuming observation and positioning cycles, the positioning tag may comprise a motion sensor 222, which is coupled to the microprocessor 200. The microprocessor may utilize the output of the motion sensor in such a way that the signal quality observations are only relayed to the positioning engine PE when the positioning tag's movement has recently stopped. This embodiment saves energy by not positioning a tag in movement.

Some optional measures may be taken to further improve the robustness of the inventive positioning tag PT against tampering. For instance, it is theoretically possible that someone wishing to interfere with the operation of an airplane sends a parcel containing a recording WLAN scanner that scans and timestamps all the BEACON SSID packets received along the route. The BEACON SSID frames to be received after the flight can be determined via the timestamps. Such a potential terrorist might attempt to disrupt the airplane's navigation and/or communication by sending parcels containing battery-powered transmitters transmitting BEACON SSID frames of access points that are normally received after the flight. In this way, all the positioning tags in an airplane might be falsely placed in the active (transmitting) scan mode during flight.

In order to eliminate such threats, some optional measures may be taken. For instance, a specific embodiment of the positioning tag PT comprises one or more environmental indication sensors, generally denoted by reference numeral 224, whose output signals may be used to detect the positioning tag's presence in an airplane during flight. For instance, the positioning tag may comprise an integrated air pressure sensor. This embodiment is based on the idea that air pressure in an airplane during flight is significantly lower than at or near sea level. Alternatively or additionally, the positioning tag may comprise an integrated sound detector (microphone and sound processing logic) that detects a sound signature, such as signal spectrum, which is typical for an airplane. Yet further, another embodiment comprises radio signal reception circuitry that detects the presence of communication bands dedicated to airplanes. Detection of any of such environmental indications has the effect that the positioning tag's microprocessor keeps the positioning tag in the passive scan mode, regardless of any BEACON SSID packets being received.

Instead of the above-described environmental indication sensors or in addition to them, the positioning tag may in some embodiments store a waiting time for the pre-stored BEACON SSID frames. Assume that the positioning tags are expected to be in an airplane (outside WLAN coverage) for two hours. Robustness against tampering may be improved by storing the expected two-hour time along with the pre-stored BEACON SSID frames. The scan mode logic of the positioning tag may, on losing WLAN coverage, wait for two hours before accepting any BEACON SSID packets.

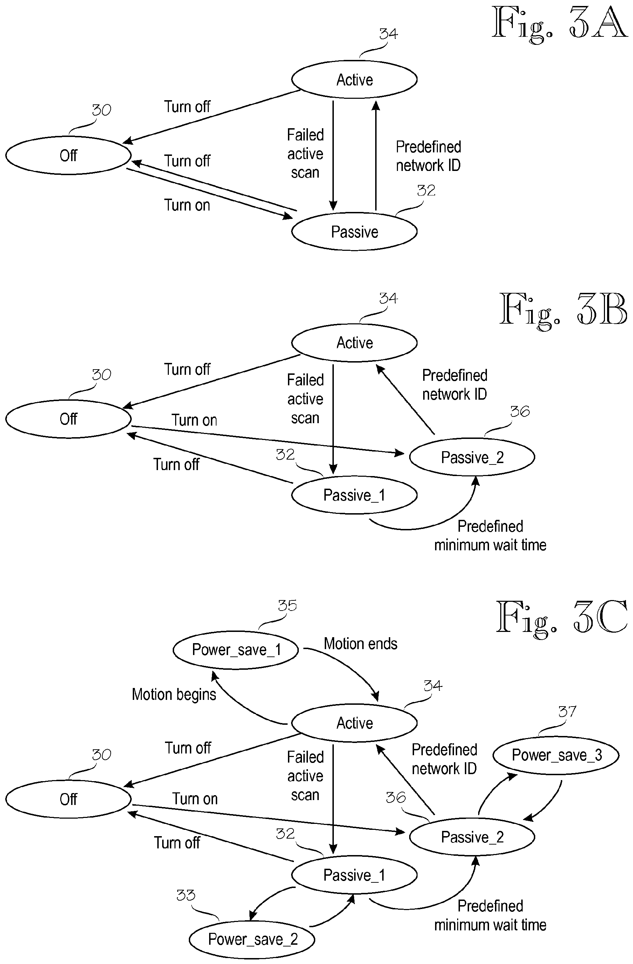

Figures 3A through 3C show exemplary state transition diagrams for an inventive wireless signal transceiver STR, such as a positioning tag PT. The state transition diagrams serve to illustrate the operation of the scan mode program (item 232 in Figure 2) and its embodiments.

Figure 3A shows a basic state transition diagram. Reference numeral 30 denotes an off state, ie, a state in which the power to the positioning tag is largely switched off. Upon turning on, the positioning tag enters the passive scan mode 32, in which the positioning tag searches for WLAN access points by silently waiting for the reception of a BEACON SSID packet that matches any of those previously stored in its memory. When the positioning tag receives one, it enters the active scan mode 34, in which it monitors for further WLAN access points by means of PROBE REQUEST messages. A failed active scan results in a state transition to the passive scan mode 32. In the present embodiment, the only way the positioning can enter the active state 34 is by reception of a BEACON SSID frame that matches any of one of the predefined BEACON SSID strings stored in the positioning tag's memory.

Figure 3B shows a state transition diagram for an embodiment of the inventive positioning tag which implements a minimum wait time before resuming active scan mode. In this embodiment the positioning tag has two passive scan modes, denoted Passive_1, 32 and Passive_2, 36. The Passive_1 state 32, is entered as a result of a failed active scan, similarly to the state diagram shown in Figure 3A. Expiry of a predefined minimum wait time, corresponding to an expected flight time, causes a state transition to the Passive_2 state 36, from which a reception of a predefined BEACON SSID identifier causes the positioning tag to enter the active scan mode 34.

Figure 3C shows a state transition diagram for an embodiment of the inventive positioning tag which utilizes a motion sensor (item 222 in Figure 2) for saving battery power. In this embodiment, an indication of tag movement from the motion sensor causes a state transition from the Passive_1 state 32, Passive_2 state 36 or Active state 34 to a respective Power_save_n (n=1, 2, 3) states 33, 37, 35. An indication from the motion sensor that the positioning tag's movement has ended causes the microprocessor to return the positioning tag to the state that preceded the movement. In practice, the indication of movement is preferably generated by a simple motion sensor plus logical filtering performed by the microprocessor, wherein the filtering is designed to ignore short-term spurious signals.

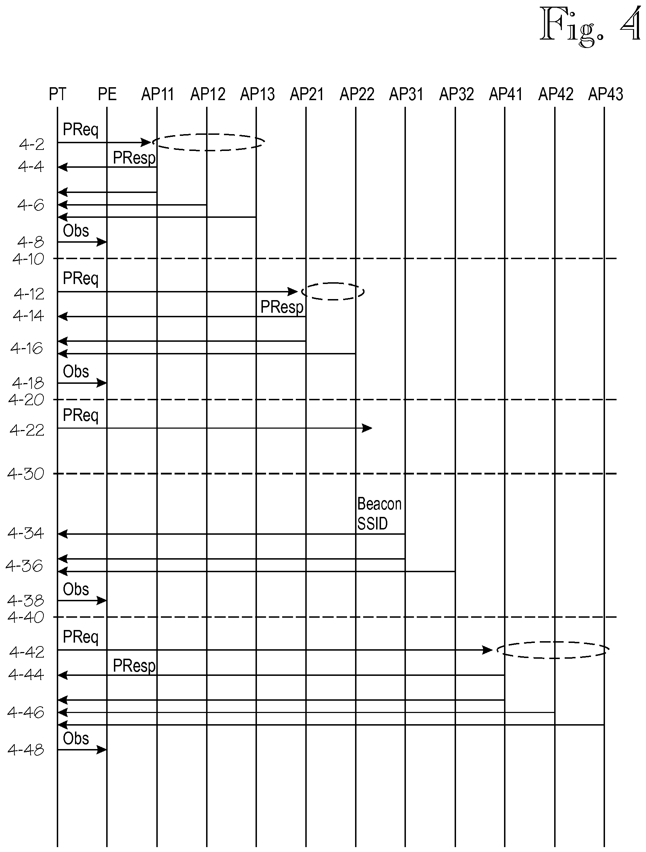

Figure 4 is a signalling diagram depicting a series of events in the scenario shown in Figure 1. The signalling diagram further serves to illustrate the operation of the scan mode program (item 232 in Figure 2) and its embodiments. Again, the inventive wireless signal transceiver is assumed to be a positioning tag and the wireless networks are assumed to be WLAN networks as defined in IEEE 802.11 standard. The positioning tag PT, along with the asset AS to be tracked, enters WLAN network WN1, as shown in Figure 1. In step 4-2 the positioning tag PT broadcasts a PROBE REQUEST message within the network WN1. In step 4-4 it receives PROBE RESPONSE messages from the access points providing network coverage. In the present scenario, the positioning tag PT will be served by access point AP11. In step 4-6 the positioning tag performs signal quality observations in respect of all access points whose transmission it can receive. In step 4-8 the positioning tag PT relays the observations to the positioning engine PE. Before doing so, the positioning tag needs to associate to the network WN1, which operation is not shown separately. Steps 4-6 and 4-8 may be repeated several times as long as the positioning tag PT remains in the coverage area of network WN1.

At a point of time denoted by reference numeral 4-10, the positioning tag PT moves to a second WLAN network WN2, in which the operation of the positioning tag PT is similar to its operation in the first WLAN network WN1. The steps 4-12 through 4-18 correspond to respective steps 4-2 through 4-8, and a detailed description is omitted.

At time 4-20 the positioning tag exits the coverage area of the second WLAN network WN2. In step 4-22, the positioning tag again broadcasts a PROBE REQUEST message. Since there is no WLAN coverage, no access point returns a PROBE RESPONSE message, and the active scan fails. As a result, the positioning tag PT enables the passive scan mode, in which it does not transmit anything. At time 4-30 the positioning tag PT enters the coverage area of the third WLAN network WN3. Because the positioning tag PT is in the passive scan mode, it does not send a PROBE REQUEST message but waits until it receives, in step 4-34, a BEACON SSID frame from an access point of network WN3, such as access point AP31. The BEACON SSID of network WN3 has been pre-stored in the positioning tag's memory. As a result, the positioning tag enables the active scan mode, although this is not apparent from the signailing diagram until step 4-40, in which the positioning tag PT moves from the third WLAN network WN3 to the fourth network WN4, to which it attaches via the active scan method, which involves transmitting a PROBE REQUEST message 4-42 and receiving a PROBE RESPONSE message 4-44. The steps relating to making and transmitting signal quality observations, namely 4-36, 4-38; 4-46, 4-48 are similar to the steps described in connection with the first network WN1.

In positioning applications wherein the positioning tag is positioned based on observations of the tag's transmissions by the access points, the tag does not have to observe the received signal quality or even associate with a network in order to transmit the observations. The observations, be they made on the transceiver's side or on the network side, are primarily needed for positioning applications, and these acts can be omitted in applications wherein the transceiver is positioned by other means or not at all.

It is readily apparent to a person skilled in the art that, as the technology advances, the inventive concept can be implemented in various ways. The invention and its embodiments are not limited to the examples described above but may vary within the scope of the claims.

### Reference documents

1. WO02/054813 discloses techniques for positioning a receiver by means of a probabilistic model of a wireless communication environment;
2. WO03/102621 discloses techniques for improving the robustness of the positioning engine by using location history of the tracked object;
3. WO2004/008796 discloses techniques for determining device models that compensate for the differences between observation capabilities of target objects, such as positioning tags;
4. WO2004/008795 discloses techniques for improving the robustness of the positioning engine by using a topology graph that models the topology of the positioning environment;
5. EP1795912 discloses techniques for improving the performance of the positioning engine; and
6. EP1796419 also discloses techniques for improving the performance of the positioning engine.

## Claims

1. A wireless signal transceiver (STR), comprising:
• wireless signal transmission means (210) for transmitting and receiving signals in one or more wireless networks (WN1 - WN4);
• a microprocessor (200) and memory (202);
• one or more environmental indication sensors (224) configured to indicate environmental conditions that correspond to an application domain;
• wherein the memory (202) comprises a scan mode program (232), the execution of which by the microprocessor (200) causes the wireless signal transceiver to
∘ receive and store in the memory one or more predefined wireless network identifiers (234); and
∘ enable one scan mode at a time from a set of scan modes that includes:
▪ an active scan mode (34) of a wireless network, in which the wireless signal transceiver repeatedly transmits a probe request message (4-2) on one or more channels, until the wireless signal transceiver receives a probe response message (4-4) from the wireless network, which case results in a successful active scan, or until a fulfilment of a predetermined set of criteria terminates (4-22) the active scan, which case results in a failed active scan;
▪ a passive scan mode (32) of the wireless network, in which the wireless signal transceiver does not send anything to or via the wireless network but waits on each one of the one or more channels for a received wireless network identifier (4-34) from at least one of the one or more wireless network for a predetermined time before proceeding to another one of the one or more channels, wherein the wireless signal transceiver enables passive scan mode when activated;
∘ wherein the scan mode program (232), when executed by the microprocessor (200), causes the wireless signal transceiver to enable the active scan mode in response to a successful active scan while in active scan mode or to a reception (4-34) of a wireless network identifier while in passive scan mode that matches at least one of the predefined wireless network identifiers (234) stored in the memory of the wireless signal transceiver;
∘ and wherein the scan mode program, when executed by the microprocessor (200), causes the wireless signal transceiver to enable the passive scan mode in response to a failed active scan (4-22), and wherein the wireless signal transceiver is configured to enable the passive scan mode in response to an indication of said environmental conditions.

2. A wireless signal transceiver according to claim 1, wherein the memory (202) further comprises a positioning program, the execution of which by the microprocessor (200) causes the wireless signal transceiver to act as a signal transmitter and/or a signal receiver in a positioning system which comprises, in addition to the wireless signal transceiver, a plurality of access points and a positioning server which positions the wireless signal transceiver based on received signal quality observations from signal transmissions between the wireless signal transceiver and the plurality of access points.

3. A wireless signal transceiver according to claim 1 or 2, further comprising a motion sensor (222) and a motion sensing program, wherein execution of the motion sensing program by the microprocessor causes the wireless signal transceiver to reduce or eliminate transmissions if the motion sensor indicates that the wireless signal transceiver is in motion.

4. A wireless signal transceiver according to claim 1, wherein said one or more environmental indication sensors comprises at least one environmental indication sensor which is responsive to one more of temperature, humidity, air pressure, sound and electromagnetic signals.

5. A wireless signal transceiver according to claim 1 or 4, wherein the application domain is an airplane.

6. A wireless signal transceiver according to claim 4, wherein said electromagnetic signals include a predetermined network identifier.

7. A wireless signal transceiver according to any one of the preceding claims, wherein the scan mode program, when executed by the microprocessor (200), causes the wireless signal transceiver to enable the passive scan mode for a predefined minimum time, in response to said failed active scan.

8. A wireless signal transceiver according to claim 7, wherein the predefined minimum time is specific to each network identifier.

9. A wireless signal transceiver according to any one of the preceding claims, wherein the wireless network is a wireless local-area network as defined in standard IEEE 802.11, and the network identifier is an SSID string.

10. A method for operating a wireless signal transceiver (STR), which comprises wireless signal transmission means for transmitting and receiving signals in one or more wireless networks (WN1 - WN4); one or more environmental indication sensors (224), and a microprocessor (200) and memory (202);
the method comprising:
• receiving and storing in the memory one or more predefined wireless network identifiers; and
• enabling one scan mode at a time from a set of scan modes that includes:
∘ an active scan mode of a wireless network, in which the wireless signal transceiver repeatedly transmits a probe request message on one or more channels, until the wireless signal transceiver receives a probe response message from the wireless network, which case results in a successful active scan, or until a fulfilment of a predetermined set of criteria terminates the active scan, which case results in a failed active scan;
∘ a passive scan mode of the wireless network, in which the wireless signal transceiver does not send anything to or via the wireless network but waits on each one of the one or more channels for a received wireless network identifier from at least one of the one or more wireless networks for a predetermined time before proceeding to another one of the one or more channels;
• enabling the one or more environmental indication sensors (224) configured to indicate environmental conditions that correspond to an application domain;
• enabling the active scan mode in response to a successful active scan while in active scan mode or to a reception of a wireless network identifier while in passive scan mode that matches at least one of the predefined wireless network identifiers stored in the memory of the wireless signal transceiver; and
• enabling the passive scan mode in response to a failed active scan;
• enabling the passive scan mode in response to an indication of said environmental conditions; and
• enabling the passive scan mode when the wireless signal transceiver is activated.

## Patentansprüche

1. Ein Sender/Empfänger für Drahtlossignale (STR), mit:
• Übertragungsmitteln für Drahtlossignale (210) zum Senden und Empfangen von Signalen in einem oder mehreren Drahtlosnetzwerken (WN1 - WN4);
• einem Mikroprozessor (200) und einem Speicher (202);
• einem oder mehreren Umgebungsanzeigesensoren (224), die so konfiguriert sind, dass die Umgebungsbedingungen angezeigt werden, die auf einen Anwendungsbereich abgestimmt sind;
• wobei der Speicher (202) ein Scanmodus-Programm (232) aufweist, dessen Ausführung durch den Mikroprozessor (200) dazu führt, dass der Sender/Empfänger für Drahtlossignale Folgendes durchführt:
∘ Empfangen und Speichern im Speicher einer oder mehrerer vordefinierter Drahtlosnetzwerkkennungen (234); und
∘ Aktivieren eines Scanmodus zu einem bestimmten Zeitpunkt aus einer Reihe von Scanmodi mit:
▪ einem aktiven Scanmodus (34) eines Drahtlosnetzwerks, bei dem der Sender/Empfänger für Drahtlossignale wiederholt eine Prüfungsanfragenachricht (4-2) auf einem oder mehreren Kanälen übermittelt, bis der Sender/Empfänger für Drahtlossignale eine Prüfungsanfragenachricht (4-4) vom Drahtlosnetzwerk erhält, was zu einem erfolgreichen aktiven Scan führt, oder bis der aktive Scan durch Erfüllen einer vordefinierten Reihe von Kriterien beendet wird (4-22), was zu einem fehlgeschlagenen aktiven Scan führt;
▪ einem passiven Scanmodus (32) des Drahtlosnetzwerks, bei dem der Sender/Empfänger für Drahtlossignale nichts an oder über das Drahtlosnetzwerk sendet, aber auf jedem oder mehreren Kanälen auf eine eingegangene Drahtlosnetzwerkkennung (4-34) von mindestens einem oder mehreren Drahtlosnetzwerken während einer vordefinierten Zeit wartet, bevor auf einen anderen Kanal von diesem einen oder mehreren Kanälen übergegangen wird, wobei der Sender/Empfänger für Drahtlossignale bei dessen Aktivierung den passiven Scanmodus aktiviert;
∘ wobei das Scanmodus-Programm (232), bei dessen Ausführung durch den Mikroprozessor (200), den Sender/Empfänger für Drahtlossignale veranlasst zum Aktivieren des aktiven Scanmodus als Reaktion auf einen erfolgreichen aktiven Scan, während dieser sich im aktiven Scanmodus befindet, oder zum Empfangen (4-34) einer Drahtlosnetzwerkkennung, während dieser sich im passiven Scanmodus befindet, die mindestens einer der vordefinierten Drahtlosnetzwerkkennungen (234) entspricht, die im Speicher des Senders/Empfängers für Drahtlossignale gespeichert sind;
∘ und wobei das Scanmodus-Programm, bei dessen Ausführung durch den Mikroprozessor (200), den Sender/Empfänger für Drahtlossignale veranlasst zum Aktivieren des passiven Scanmodus als Reaktion auf einen fehlgeschlagenen aktiven Scan (4-22) und wobei der Sender/Empfänger für Drahtlossignale so konfiguriert ist, dass der passive Scanmodus als Reaktion auf eine Anzeige der Umgebungsbedingungen aktiviert wird.

2. Ein Sender/Empfänger für Drahtlossignale nach Anspruch 1, wobei der Speicher (202) ferner ein Positionierungsprogramm aufweist, dessen Ausführung durch den Mikroprozessor (200) den Sender/Empfänger für Drahtlossignale dazu bringt, als Signalsender und/oder Signalempfänger in einem Positionierungssystem zu fungieren, das zusätzlich zum Sender/Empfänger für Drahtlossignale eine Vielzahl von Zugangspunkten und einen Positionierungsserver umfasst, der den Sender/Empfänger für Drahtlossignale basierend auf den eingegangenen Beobachtungen zur Signalqualität aus Signalübertragungen zwischen dem Sender/Empfänger für Drahtlossignale und der Vielzahl von Zugangspunkten positioniert.

3. Ein Sender/Empfänger für Drahtlossignale nach Anspruch 1 oder 2, der ferner einen Bewegungssensor (222) und ein Bewegungserfassungsprogramm aufweist, wobei das Ausführen des Bewegungserfassungsprogramms durch den Mikroprozessor den Sender/Empfänger für Drahtlossignale dazu bringt, die Übertragungen zu reduzieren oder einzustellen, wenn der Bewegungssensor anzeigt, dass sich der Sender/Empfänger für Drahtlossignale bewegt.

4. Ein Sender/Empfänger für Drahtlossignale nach Anspruch 1, wobei der eine oder die mehreren Umgebungsanzeigesensoren mindestens einen Umgebungsanzeigesensor enthalten, der auf ein zusätzliches der Temperatur-, Feuchtigkeits-, Luftdruck, Schall- oder elektromagnetischen Signale reagiert.

5. Ein Sender/Empfänger für Drahtlossignale nach Anspruch 1 oder 4, wobei der Anwendungsbereich ein Flugzeug ist.

6. Ein Sender/Empfänger für Drahtlossignale nach Anspruch 4, wobei die elektromagnetischen Signale eine vordefinierte Netzwerkkennung aufweisen.

7. Ein Sender/Empfänger für Drahtlossignale nach einem der vorstehenden Ansprüche, wobei das Scanmodus-Programm, bei dessen Ausführung durch den Mikroprozessor (200), den Sender/Empfänger für Drahtlossignale dazu bringt, den passiven Scanmodus während einer vordefinierten Mindestzeit als Reaktion auf den fehlgeschlagenen aktiven Scan zu aktivieren.

8. Ein Sender/Empfänger für Drahtlossignale nach Anspruch 7, wobei die vordefinierte Mindestzeit für jede Netzwerkkennung spezifisch festgelegt wird.

9. Ein Sender/Empfänger für Drahtlossignale nach einem der vorstehenden Ansprüche, wobei das Drahtlosnetzwerk ein drahtloses lokales Netzwerk gemäß Standard IEEE 802.11 ist und die Netzwerkkennung eine SSID-Zeichenfolge ist.

10. Ein Verfahren zum Betreiben eines Senders/Empfängers für Drahtlossignale (STR) mit Übertragungsmitteln für Drahtlossignale zum Senden und Empfangen von Signalen in einem oder mehreren Drahtlosnetzwerken (WN1 - WN4); einem oder mehreren Umgebungsanzeigesensoren (224) sowie einem Mikroprozessor (200) und einem Speicher (202);
wobei das Verfahren umfasst:
• Empfangen und Speichern im Speicher einer oder mehrerer vordefinierter Drahtlosnetzwerkkennungen; und
• Aktivieren eines Scanmodus zu einem bestimmten Zeitpunkt aus einer Reihe von Scanmodi mit:
∘ einem aktiven Scanmodus eines Drahtlosnetzwerks, bei dem der Sender/Empfänger für Drahtlossignale wiederholt eine Prüfungsanfragenachricht auf einem oder mehreren Kanälen übermittelt, bis der Sender/Empfänger für Drahtlossignale eine Prüfungsanfragenachricht vom Drahtlosnetzwerk erhält, was zu einem erfolgreichen aktiven Scan führt, oder bis der aktive Scan durch Erfüllen einer vordefinierten Reihe von Kriterien beendet wird, was zu einem fehlgeschlagenen aktiven Scan führt;
∘ einem passiven Scanmodus des Drahtlosnetzwerks, bei dem der Sender/Empfänger für Drahtlossignale nichts an oder über das Drahtlosnetzwerk sendet, aber auf jedem oder mehreren Kanälen auf eine eingegangene Drahtlosnetzwerkkennung von mindestens einem oder mehreren Drahtlosnetzwerken während einer vordefinierten Zeit wartet, bevor auf einen anderen Kanal von diesem einen oder mehreren Kanälen übergegangen wird;
• Aktivieren eines oder mehrerer Umgebungsanzeigesensoren (224), die so konfiguriert sind, dass die Umgebungsbedingungen angezeigt werden, die auf einen Anwendungsbereich abgestimmt sind;
• Aktivieren des aktiven Scanmodus als Reaktion auf einen erfolgreichen aktiven Scan, während sich die Vorrichtung im aktiven Scanmodus befindet, oder Empfangen einer Drahtlosnetzwerkkennung, während sich die Vorrichtung im passiven Scanmodus befindet, die mindestens einer der vordefinierten Drahtlosnetzwerkkennungen entspricht, die im Speicher des Senders/Empfängers für Drahtlossignale gespeichert sind; und
• Aktivieren des passiven Scanmodus als Reaktion auf einen fehlgeschlagenen aktiven Scan;
• Aktivieren des passiven Scanmodus als Reaktion auf eine Anzeige der Umgebungsbedingungen; und
• Aktivieren des passiven Scanmodus, wenn der Sender/Empfänger für Drahtlossignale aktiviert ist.

## Revendications

1. Emetteur-récepteur de signal sans fil (STR), comprenant :
• des moyens de transmission de signal sans fil (210) pour transmettre et recevoir des signaux dans un ou plusieurs réseaux sans fil (WN1 - WN4) ;
• un microprocesseur (200) et une mémoire (202) ;
• un ou plusieurs capteurs d'indication environnementale (224) configurés pour indiquer des conditions environnementales qui correspondent à un domaine d'application ;
• dans lequel la mémoire (202) comprend un programme de mode de balayage (232), dont l'exécution par le microprocesseur (200) amène l'émetteur-récepteur de signal sans fil à
∘ recevoir et stocker dans la mémoire un ou plusieurs identifiants de réseau sans fil prédéfinis (234) ; et
∘ activer un mode de numérisation à la fois parmi un ensemble de modes de balayage qui inclut :
■ un mode de balayage actif (34) d'un réseau sans fil, dans lequel l'émetteur-récepteur de signal sans fil transmet de façon répétée un message de demande de sonde (4-2) sur un ou plusieurs canaux, jusqu'à ce que l'émetteur de signal sans fil reçoive un message de réponse de sonde (4-4) en provenance du réseau sans fil, lequel cas aboutit à un balayage actif réussi, ou jusqu'à ce qu'une satisfaction d'un ensemble prédéterminé de critères termine (4-22) le balayage actif, lequel cas aboutit à un balayage actif échoué ;
■ un mode de balayage passif (32) du réseau sans fil, dans lequel l'émetteur-récepteur de signal sans fil n'envoie rien vers ou via le réseau sans fil mais attend sur chacun des un ou plusieurs canaux un identifiant de réseau sans fil reçu (4-34) en provenance d'au moins l'un des un ou plusieurs réseaux sans fil pendant un temps prédéterminé avant de passer à un autre des un ou plusieurs canaux, dans lequel l'émetteur-récepteur de signal sans fil active un mode balayage passif lorsqu'il est activé ;
∘ dans lequel le programme de mode de balayage (232), lorsqu'il est exécuté par le microprocesseur (200), amène l'émetteur-récepteur de signal sans fil à activer le mode de balayage actif en réponse à un balayage actif réussi pendant le mode de balayage actif ou à une réception (4-34) d'un identifiant de réseau sans fil pendant le mode de balayage passif qui concorde avec au moins l'un des identifiants de réseau sans fil prédéfinis (234) stockés dans la mémoire de l'émetteur-récepteur de signal sans fil ;
∘ et dans lequel le programme de mode de balayage, lorsqu'il est exécuté par le microprocesseur (200), amène l'émetteur-récepteur de signal sans fil à activer le mode de balayage passif en réponse à un balayage actif échoué (4-22), et dans lequel l'émetteur-récepteur de signal sans fil est configuré pour activer le mode de balayage passif en réponse à une indication desdites conditions environnementales.

2. Emetteur-récepteur de signal sans fil selon la revendication 1, dans lequel la mémoire (202) comprend en outre un programme de positionnement, dont l'exécution par le microprocesseur (200) amène l'émetteur-récepteur de signal sans fil à agir comme un émetteur de signal et/ou un récepteur de signal dans un système de positionnement qui comprend, en plus de l'émetteur-récepteur de signal sans fil, une pluralité de points d'accès et un serveur de positionnement qui positionne l'émetteur-récepteur de signal sans fil sur la base d'observations de qualité de signal reçu à partir de transmissions de signal entre l'émetteur-récepteur de signal sans fil et la pluralité de points d'accès.

3. Emetteur-récepteur de signal sans fil selon la revendication 1 ou 2, comprenant en outre un capteur de mouvement (222) et un programme de détection de mouvement, dans lequel l'exécution du programme de détection de mouvement par le microprocesseur amène l'émetteur-récepteur de signal sans fil à réduire ou à éliminer les transmissions si le capteur de mouvement indique que l'émetteur-récepteur de signal sans fil est en mouvement.

4. Emetteur-récepteur de signal sans fil selon la revendication 1, dans lequel lesdits un ou plusieurs capteurs d'indication environnementale comprennent au moins un capteur d'indication environnementale qui est sensible à un ou plusieurs parmi la température, l'humidité, la pression atmosphérique, le son et les signaux électromagnétiques.

5. Emetteur-récepteur de signal sans fil selon la revendication 1 ou 4, dans lequel le domaine d'application est un avion.

6. Emetteur-récepteur de signal sans fil selon la revendication 4, dans lequel lesdits signaux électromagnétiques incluent un identifiant de réseau prédéterminé.

7. Emetteur-récepteur de signal sans fil selon l'une quelconque des revendications précédentes, dans lequel le programme de mode de balayage, lorsqu'il est exécuté par le microprocesseur (200), amène l'émetteur-récepteur de signal sans fil à activer le mode de balayage passif pendant un temps minimum prédéfini, en réponse audit balayage actif échoué.

8. Emetteur-récepteur de signal sans fil selon la revendication 7, dans lequel le temps minimum prédéfini est spécifique à chaque identifiant de réseau.

9. Emetteur-récepteur de signal sans fil selon l'une quelconque des revendications précédentes, dans lequel le réseau sans fil est un réseau local sans fil tel que défini dans la norme IEEE 802.11, et l'identifiant de réseau est une chaîne SSID.

10. Procédé pour exploiter un émetteur-récepteur de signal sans fil (STR), qui comprend des moyens de transmission de signal sans fil pour transmettre et recevoir des signaux dans un ou plusieurs réseaux sans fil (WN1 - WN4) ; un ou plusieurs capteurs d'indication environnementale (224), et un microprocesseur (200) et une mémoire (202) ;
le procédé comprenant :
• la réception et le stockage dans la mémoire d'un ou plusieurs identifiants de réseau sans fil prédéfinis ; et
• l'activation d'un mode de balayage à la fois parmi un ensemble de modes de balayage qui inclut :
° un mode de balayage actif d'un réseau sans fil, dans lequel l'émetteur-récepteur de signal sans fil transmet de façon répétée un message de demande de sonde sur un ou plusieurs canaux, jusqu'à ce que l'émetteur de signal sans fil reçoive un message de réponse de sonde en provenance du réseau sans fil, lequel cas aboutit à un balayage actif réussi, ou jusqu'à ce qu'une satisfaction d'un ensemble prédéterminé de critères termine le balayage actif, lequel cas aboutit à un balayage actif échoué ;
° un mode de balayage passif du réseau sans fil, dans lequel l'émetteur-récepteur de signal sans fil n'envoie rien vers ou via le réseau sans fil mais attend sur chacun des un ou plusieurs canaux un identifiant de réseau sans fil reçu en provenance d'au moins l'un des un ou plusieurs réseaux sans fil pendant un temps prédéterminé avant de passer à un autre des un ou plusieurs canaux ;
• l'activation des un ou plusieurs capteurs d'indication environnementale (224) configurés pour indiquer des conditions environnementales qui correspondent à un domaine d'application ;
• l'activation du mode de balayage actif en réponse à un balayage actif réussi pendant le mode de balayage actif ou à une réception d'un identifiant de réseau sans fil pendant le mode de balayage passif qui concorde avec au moins l'un des identifiants de réseau sans fil prédéfinis stockés dans la mémoire de l'émetteur-récepteur de signal sans fil ; et
• l'activation du mode de balayage passif en réponse à un balayage actif échoué ;
• l'activation du mode de balayage passif en réponse à une indication desdites conditions environnementales ; et
• l'activation du mode de balayage passif lorsque l'émetteur-récepteur de signal sans fil est activé.
